# EUROPÄISCHE PATENTSCHRIFT

(11) **EP 0 699 302 B1**
(45) Veröffentlichungstag und Bekanntmachung des Hinweises auf die Patenterteilung: **22.07.1998**
(21) Anmeldenummer: 94917651.5
(22) Anmeldetag: 19.05.1994
(51) Int. Cl.: G01N 29/02

(54) **VERFAHREN UND VORRICHTUNG ZUM ERKENNEN VON FREMDKÖRPERN IN VISKOSEN ODER FLÜSSIGEN LEBENSMITTELN MIT STÜCKIGEN INHALTSSTOFFEN**
PROCESS AND DEVICE FOR RECOGNIZING FOREIGN BODIES IN VISCOUS OR FLUID, LUMP-CONTAINING FOODSTUFFS
PROCEDE ET DISPOSITIF DE RECONNAISSANCE DE CORPS ETRANGERS DANS DES DENREES ALIMENTAIRES VISQUEUSES OU FLUIDES CONTENANT DES SUBSTANCES EN MORCEAUX

(30) Priorität: 19.05.1993 DE 4316833; 10.08.1993 DE 4326765
(43) Veröffentlichungstag der Anmeldung: 06.03.1996
(73) Patentinhaber: Flüh, Gerd, D-21339 Lüneburg (DE); KRAUTKRÄMER GmbH & Co., D-50354 Hürth (DE)
(72) Erfinder: Flüh, Gerd, D-21339 Lüneburg (DE); Katten, Wolfgang, Dipl.-Ing, D-51069 Köln (DE); Krieger, Josef, Dipl.-Ing., D-50354 Hürth (DE); Rost, Manfred, Dipl.-Ing., D-50389 Wesseling (DE)
(74) Vertreter: Bauer, Wulf, Dr.
(86) Internationale Anmeldenummer: EP9401623
(87) Internationale Veröffentlichungsnummer: WO9427142

(56) Entgegenhaltungen:
- WO-A-91/16087
- DE-A- 2 012 207
- DE-A- 3 825 131
- DE-A- 4 011 923
- ULTRASONICS, Bd.28, Nr.6, November 1990, GUILDFORD, SURREY, GB Seiten 394 - 400, XP161412 C.A.MILES ET AL. 'Attenuation of ultrasounds in milks and creams.'

## Beschreibung

Die Erfindung betrifft ein Verfahren, die Verwendung eines Verfahrens sowie eine Vorrichtung zum Erkennen von Fremdkörpern in viskosen oder flüssigen Lebensmitteln mit stückigen Inhaltsstoffen.

Aus der WO-A-91/16087 sind ein Verfahren und eine entsprechende Vorrichtung zum Erkennen von Fremdkörpern, nämlich Blasen, in flüssigen Massen mit folgenden Schritten bekannt
- Förderung der Masse durch eine Mepstrecke (2),
- Messung des Förderstromes,
- Aussendung von Ultraschallsignalen durch die in der Mepstrecke geführte Masse,
- Empfang der Ultraschallsignale nach einmaligem Durchlaufen der in der Mepstrecke geführten Masse,
- Vergleich mindestens eines empfangenen Ultraschallsignals mit einem vorbestimmten Grenzwert und
- Erzeugung eines Alarm- oder Aktivierungssignals, wenn zwei empfangenen Ultraschallsignale den vorbestimmten Grenzwert unterschreiteten, zur Unterbrechung der Masseförderung.
Weiterhin ist aus der DE-A-38 25 131 eine Anordnung zur Messung der Konzentration von Öl-Wasser-Mischungen bekannt. Hierfür ist eine Meßkammer mit einem eine Mepstrecke begrenzenden Ultraschallsender und Ultraschallempfänger ausgestattet. Gemessen wird die Abschwächung des empfangenen Ultraschallsignals gegenüber dem bei einer reines Wasserfüllung sich ergebenden Signal oder aber die Veränderung der Laufzeit der Signale gegenüber der bei reinem Wasser sich ergebenden Laufzeit.

Weiterhin sind Durchleutungsgeräte bekannt, die mit Röntgenstrahlen nach dem gleichen Prinzip arbeiten, wobei die Sichtprüfung an einem Bildschirm erfolgt. Ein zusätzlicher Nachteil dieses Verfahrens besteht darin, daß die entsprechenden Arbeitsplätze einer erhöhten Strahlenbelastung ausgesetzt sind. Die Kosten für eine solche Prüfung sind sehr hoch.

Aus der DE-OS 40 13 402 ist ein Verfahren zum Erkennen von Gasblasen in mit Flüssigkeit gefüllten Leitungen sowie eine entsprechende Vorrichtung bekannt, bei der Sende- und Empfangseinrichtungen auf beiden Seiten der Leitungen angeordnet sind und Einzelimpulse bestimmter Höhe und Dauer ausgesendet und nach Durchlaufen der Flüssigkeit wieder empfangen und ausgewertet werden. Dieses bekannte Verfahren ist für den eingangs genannten Zweck ungeeignet, weil es nur eine gasförmige Phase in einer flüssigen Phase erkennen kann. Der sich daraus ergebende Dichteunterschied ist wesentlich größer, als der Dichteunterschied zwischen Fremdkörpern einerseits und stückigen Lebensmittel bzw. der viskosen oder flüssigen Masse andererseits.

Aus der Zeitschrift "Elektronik" Nr. 25/1991 ist ein "Partikel-Detektiv" bekannt, der nach dem Dopplerprinzip mit hochfrequentem Ultraschall arbeitet. Nachteilig hierbei ist jedoch, daß zur Erzielung hinreichender Genauigkeit ein sehr hoher Schaltungsaufwand zur Dopplerauswertung erforderlich ist.

Schließlich wird in der US-PS 4 607 520 ein Verfahren sowie eine Vorrichtung zur Erfassung von Blasen in einem Flüssigkeitsstrom beschrieben. Dazu werden Ultraschall-Impulsgruppen durch einen die zu prüfende Flüssigkeit enthaltenden Leitungsabschnitt gesendet.

Während eines Zeitfensters, das nach Ablauf der Impulslaufzeit geöffnet wird, wird untersucht, ob die Impulsgruppe den Empfänger erreicht. Ist dies nicht der Fall, so wird angenommen, dass sich eine Inhomogenität (Gasblase) im Ausbreitungsweg befindet. Auch mit dieser Vorrichtung ist jedoch eine Unterscheidung zwischen Fremdkörpern und stückigen Lebensmitteln nicht möglich.

Der Erfindung liegt deshalb die Aufgabe zugrunde, ein Verfahren sowie eine Vorrichtung der eingangs genannten Art anzugeben mit dem/der Fremdkörper zuverlässig auch bei Vorhandensein von stückigen Inhaltsstoffen erkannt und unterschieden werden können.

Die Lösung dieser Aufgabe erfolgt verfahrensgemäß durch die Merkmale des Anspruchs 1, weiterhin durch den Verwendungsanspruch 11 und durch die Merkmale des Vorrichtungsanspruchs 13.

Durch die Bestimmung der Laufzeit und/oder Amplitudenhöhe des/der empfangenen Ultraschallsignale können auf relativ einfache Weise Fremdkörper auch dann erkannt werden, wenn die zu untersuchende Masse nicht homogen ist, sondern stückige Produktbestandteile aufweist.

In diesem Fall bedeutet z.B. eine Amplitudenabschwächung ohne Laufzeitänderung das Vorhandensein eines Fremdkörpers, während z.B. durch ein Fruchtstück oder eine andere Konzentration bzw. Reduzierung des Zuckergehaltes neben der Amplitudenabschwächung auch eine Laufzeitverlängerung der Ultraschallsignale hervorgerufen wird.

Die zu prüfende Masse wird vor der Förderung durch die Meßstrecke zu erwärmen. Dies führt bei pektinhaltigen Lebensmitteln, wie zum Beispiel bei Marmeladen, dazu, daß die Fremdkörper (zum Beispiel Kerne) besonders deutlich von festen Lebensmittelteilen (wie zum Beispiel Früchten) unterscheidbar sind.

Das Verfahren beinhaltet ferner vorzugsweise eine adaptive Verstärkung der/der Ultraschallsignale und/oder Anpassung der (des) Grenzwerte(s). Dadurch ist eine optimale Anpassung an die Durchlässigkeit und Konsistenz des zu prüfenden Lebensmittels möglich.

Schließlich ist es auch möglich, die Amplituden der gesendeten Ultraschallsignal so zu regeln, daß die Amplituden der empfangenen Ultraschallsignale konstant sind, wobei die Änderung der Stellgröße mit dem vorbestimmten Grenzwert verglichen wird. Die Ultraschallsignale sind vorzugsweise gepulst, wobei auch ihre Laufzeit zwischen Sender und Empfänger ausgewertet werden kann.

Eine erfindungsgemäße Vorrichtung weist mindestens einen Ultraschallsender und mindestens einen Ultraschallempfänger sowie vorzugsweise einen Reflektor auf, wobei die Meßstrecke in diesem Fall zwischen dem Reflektor einerseits und den Sendern und Empfängern andererseits hindurchgeführt wird und die Ultraschallsignale die Meßstrecke zweimal durchlaufen.

Mehrere Sender und Empfänger sind insbesondere dann sinnvoll, wenn man eine größere Querschnittsfläche überwachen möchte und die Sender bzw. Empfänger eine relativ starke Richtcharakteristik aufweisen. Die einzelnen Ultraschallsender können zur optimalen Anpassung an unterschiedliche Fremdkörper und/oder unterschiedliche Massen mit abweichenden oder wechselnden Frequenzen betrieben werden.

Die einzelnen Sende- und Empfangselemente sind vorzugsweise über eine Koppelflüssigkeit mit der Meßstrecke verbunden, wobei diese Flüssigkeit zum Reinigen der Meßstrecke über ein Auslaufventil abgelassen werden kann.

Weitere Einzelheiten, Merkmale und Vorteile der Erfindung ergeben sich aus der nachfolgenden Beschreibung von Ausführungsbeispielen anhand der Zeichnung.

Es zeigt:
- Fig. 1: ein Blockschaltbild einer Ausführungsform einer erfindungsgemäßen Vorrichtung zur Durchführung des Verfahrens und
- Fig. 2: ein Flußdiagramm der Arbeitsweise einer solchen Vorrichtung.

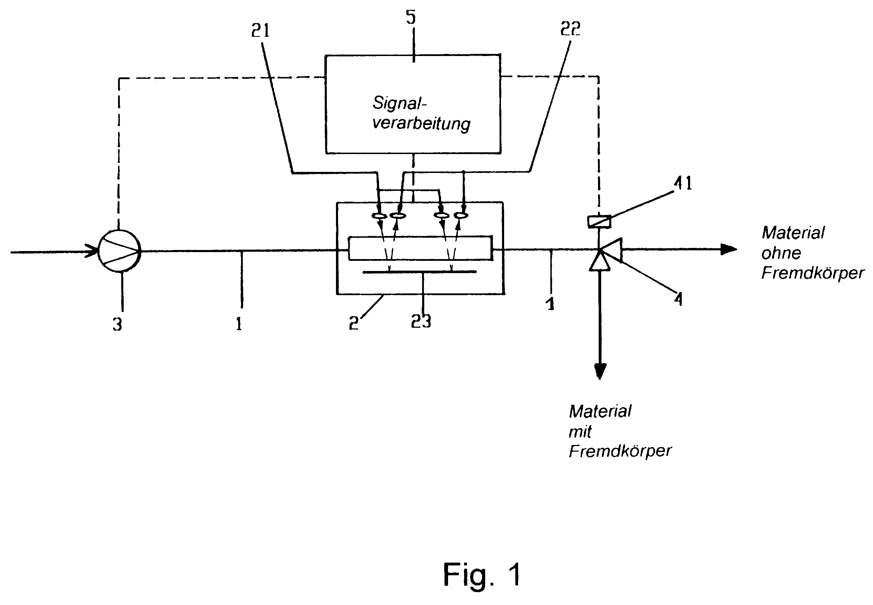

In Figur 1 ist eine Förderstrecke 1 für die zu prüfende Masse (Lebensmittel) vorgesehen. Am Eingang der Förderstrecke 1 befindet sich eine Pumpe 3, welche von einer Signalverarbeitungseinrichtung angesteuert wird. Die zu prüfende Masse wird durch eine Meßstrecke 2 gefördert und anschließend durch ein Ventil 4 entweder einer Verpackungsstation zugeführt oder aus dem Förderstrom abgeleitet, wenn in der Meßstrecke Fremdkörper in der Masse erkannt wurden. Das Ventil 4 wird mit der Signalverarbeitungseinrichtung 5 beispielsweise durch Betätigung eines Elektromagneten 41 umgeschaltet. In der Signalverarbeitungseinrichtung werden die in der Meßstrecke ermittelten Daten in üblicher Weise aufbereitet und ausgewertet.

Die Meßstrecke 2 enthält ein oder mehrere Paare von Ultraschallsendern 21 und Ultraschallempfängern 22, die entweder längs der Meßstrecke gemäß Figur 1 angeordnet sind, oder auch entlang einer Richtung senkrecht zur Längsrichtung (hintereinander) angeordnet sein können, um eine Querschnittfläche besser "auszuleuchten". Bei der dargestellten Ausführungsform sind mehrere Ultraschallsender 21 und mehrere Ultraschallempfänger 22 vorgesehen, die im wesentlichen nebeneinander auf einer Seite des Förderstromes liegen. Auf der anderen Seite des Förderstroms ist ein Reflektor 23 angeordnet, der die von jeweils einem Sender 21 ausgehenden Signale in den zugeordneten Empfänger 22 zurückreflektiert. Die jeweiligen Sender-Empfängerpaare werden vorzugsweise nacheinander angesteuert (getaktet), um gegenseitige Störungen zu verhindern. Die empfangenen Signale werden, wie oben beschrieben, auf eine Änderung vorbestimmter Signalparameter überwacht. Unter- oder überschreiten die Amplituden der empfangenen Signale das Echosignal des Reflektors um einen vorbestimmten Grenzwert, so wird der Magnet 41 des Ventils 4 angesteuert und die Masse solange aus dem Förderweg abgeleitet, bis die Amplitudenabweichung wieder unterhalb des Grenzwertes liegt. In Abhängigkeit von der Länge der Meßstrecke, des Volumens der Förderstrecke zwischen Meßstrecke und Ventil sowie der Fördergeschwindigkeit bleibt das Ventil 4 über diesen Zeitpunkt hinaus noch solange umgeschaltet, bis die in der Meßstrecke geprüfte Masse, bei der die Signalparameter die Grenzwerte überschritten haben, aus dem Förderstrom entfernt ist.

Als Signalparameter kann in einfacher Weise die Amplitude des empfangenen Echosignals bei einer fremdkörperfreien Masse im Vergleich zur Amplitude des empfangenen Signals bei Vorhandensein eines Fremdkörpers ausgewertet werden. Diese Amplitude kann in Abhängigkeit von der Art des Fremdkörpers sowohl kleiner als auch größer als die Amplitude des Echosignals sein. Um Massen verschiedener Konsistenz und unterschiedlicher Eigenschaften der enthaltenen Lebensmittelstücke prüfen zu können, ist der Grenzwert vorzugsweise einstellbar. Diese Einstellung kann beispielsweise automatisch zu Beginn der Förderung dadurch erfolgen, daß dieser an die Schallabsorption der Masse angeglichen wird.

Sofern die geförderte Masse einen Fremdkörper enthält, wird das von dem Reflektor reflektierte Ultraschallecho abgeschattet, so daß das Signal mit erhöhter oder verminderter Amplitude empfangen wird. Diese Störung der Signal intensität wird in der Signalverarbeitungseinrichtung 5 erfaßt und ausgewertet. Da die Sender vorzugsweise gepulst betrieben werden, ist zusätzlich eine Auswertung im Hinblick auf eine durch die Reflexion durch einen Fremdkörper verursachte Verkürzung oder Verlängerung der Signallaufzeit gegenüber der Reflexion an dem Reflektor möglich.

Bei einer realisierten Anordnung wurde ein mehrkanaliges Ultraschallmodul verwendet, welches mit vier Prüfkopfpaaren in Durchschallung betrieben werden kann. Die Messung erfolgte im sequentiellen Multiplexbetrieb. Für jeden Prüfkanal stand eine Blende mit Amplitudenermittlung zur Verfügung. Verstärkung und Schwellen wurden so nachgeführt, daß eine optimale Erkennungsrate von Fremdkörpern erreicht wird. Für die Steuerung und Auswertung diente ein Mikrokontroller.

Die Wiederholfrequenz der Ultraschallmessung konnte über die Bedieneroberfläche eingestellt werden. Die Impulsfolgefrequenz betrug insgesamt maximal 4 kHz, was einem Takt von 1 kHz bei vier Kanälen entsprach. Die Messungen erfolgten in einem Frequenzbereich von zwischen 0,1 und 20 MHz. Innerhalb der Blende wurden Spitzenwerte, und zwar die positive und negative Halbwelle gemessen. Die Blende wurde zwischen 10µs und 30µs gestartet und hatte eine Breite in der Größenordnung von 3 bis 6µs.

Die Auswertung erfolgte automatisch, wobei Verstärkung und Auswerteschwelle in jedem Kanal manuell einstellbar waren. Der Ereignisausgang wurde aktiviert, sobald die Schwelle n-mal (n einstellbar zwischen 1 und 256) unterschritten wurde.

Sofern die zu prüfende Masse beispielsweise eine sehr ungleichförmige Konsistenz aufweist, die zu einer stärkeren Schwankung der Intensität des empfangenen Signals führt, kann als Signalparameter zusätzlich oder alternativ sowohl die Amplitudenveränderung als auch die Laufzeitänderung des Schalls, insbesondere im Vergleich zu nacheinander empfangenen Ultraschallsignalen ausgewertet werden. Ein besonders großer Meßbereich wird dann erzielt, wenn die Amplituden der gesendeten Ultraschallsignale ständig so nachgeregelt werden , daß die Amplitude des empfangenen Signals konstant ist, wobei die Stellgröße nun als Signalparameter ausgewertet wird.

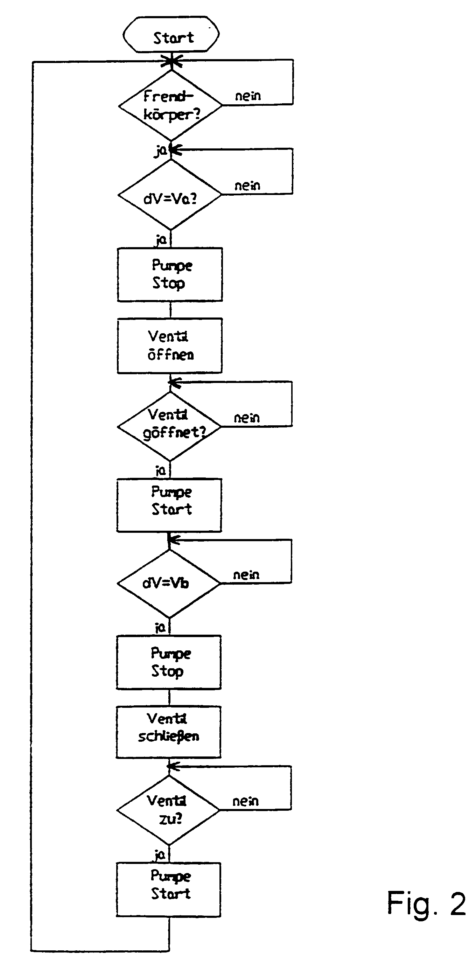

Figur 2 zeigt ein Flußdiagramm der Arbeitsweise einer Vorrichtung zum Erkennen und Abscheiden von Fremdkörpern aus einer geförderten Grundmasse, die stückige Lebensmittel aufweist. Zunächst wird abgefragt, ob ein Fremdkörper vorhanden ist oder nicht. Sobald ein Fremdkörper erfaßt wird, wird geprüft, ob das nach der Fremdkörperdetektion geförderte Fördervolumen dV gleich einem Volumen der Förderstrecke zwischen Meßstrecke und Ventil (Totraumvolumen Va) ist. Wenn diese Bedingung erfüllt ist, die Masse mit dem Fremdkörper das Ventil also erreicht hat, wird der Betrieb der Pumpe eingestellt und das Ventil geöffnet. Sobald das Ventil geöffnet ist, wird die Pumpe wieder eingeschaltet und solange betrieben, bis das Fördervolumen dV gleich dem Ausschubvolumen Vb ist. Ist diese Bedingung erfüllt, so wird die Pumpe wieder angehalten und das Ventil in seine ursprüngliche Stellung umgeschaltet. Nach Erreichen dieser Schalterstellung wird die Pumpe wieder in Betrieb genommen, bis ein neuer Fremdkörper erfaßt wird. Die Volumina Va und Vb können dabei in geeigneter Weise voreingestellt werden.

Die erfindungsgemäße Vorrichtung läßt sich in einfacher Weise mit einer Anlage zum Mischen, Abfüllen und/oder Verpacken von homogenen und nicht homogenen Nahrungsmittel kombinieren.

Das erfindungsgemäße Prinzip ist auch zum Erkennen von Fremdkörpern, wie zum Beispiel Knochen oder Gräten in Fleisch bzw. Fisch, d.h. also in im wesentlichen festen Massen geeignet.

### Bezugszeichensliste

- 1: Förderstrecke
- 2: Meßstrecke
- 3: Pumpe
- 4: Ventil
- 5: Signalverarbeitungseinrichtung
- 21: Ultraschallsender
- 22: Ultraschallempfänger
- 23: Reflektor
- 41: Elektromagnet

## Patentansprüche

1. Verfahren zum Erkennen von Fremdkörpern in viskosen oder flüssigen Massen mit den folgenden Verfahrensschritten
- vorzugsweise kontinuierliche Förderung der Masse durch eine Meßstrecke (2),
- Messung des Förderstromes,
- Aussendung von Ultraschallsignalen durch die in der Meßstrecke (2) geführte Masse,
- Empfang der Ultraschallsignale nach einmaligem oder zweimaligem Durchlaufen der in der Meßstrecke geführten Masse,
- Vergleich mindestens eines empfangenen Ultraschallsignals mit mindestens einem vorbestimmten Grenzwert und
- Erzeugung eines Alarm- und/oder Aktivierungssignals, wenn mindestens eines der empfangenen Ultraschallsignale den mindestens einen vorbestimmten Grenzwert unter- oder überschreitet, zur Unterbrechung der Masseförderung und/oder Ableitung der Masse aus dem Förderstrom, dadurch gekennzeichnet, dass die Masse ein Lebensmittel ist, das stückige Inhaltsstoffe aufweist und dadurch, dass die Masse vor ihrer Förderung durch die Meßstrecke (2) erwärmt wird.

2. Verfahren nach Anspruch 1, dadurch gekennzeichnet, dass durch das Aktivierungssignal dem Massestrom ein Lösungsmittel zugegeben wird.

3. Verfahren nach Anspruch 1 oder 2, **dadurch gekennzeichnet,** daß durch das Aktivierungssignal die Temperatur des Massestromes zur Auflösung von Festkörpern erhöht wird.

4. Verfahren nach mindestens einem der vorhergehenden Ansprüche, **dadurch gekennzeichnet,** daß durch das Aktivierungssignal eine Steuerung von Kristallisationsvorgängen und/oder eine Trennung von Phasen eingeleitet wird.

5. Verfahren nach mindestens einem der vorhergehenden Ansprüche, **dadurch gekennzeichnet,** daß die Amplitude der empfangenen Ultraschallsignale ausgewertet wird.

6. Verfahren nach mindestens einem der vorhergehenden Ansprüche, **dadurch gekennzeichnet,** daß die Änderung der Amplitude mehrerer nacheinander empfangener Ultraschallsignale ausgewertet wird.

7. Verfahren nach mindestens einem der vorhergehenden Ansprüche, **dadurch gekennzeichnet,** daß die Geschwindigkeit von Amplitudenänderungen mehrerer nacheinander empfangener Ulraschallsignale ausgewertet wird.

8. Verfahren nach mindestens einem der vorhergehenden Ansprüche, **dadurch gekennzeichnet,** daß die Amplituden der gesendeten Ultraschallsignale so geregelt werden, daß die Amplituden der empfangenen Ultraschallsignale konstant sind, wobei die Änderung der Stellgröße mit dem Vorbestimmten Grenzwert verglichen wird.

9. Verfahren nach mindestens einem der vorhergehenden Ansprüchen, dadurch gekennzeichnet, dass die Ultraschallsignale gepulst sind.

10. Verfahren nach mindestens einem der vorhergehenden Ansprüche, dadurch gekennzeichnet, dass die Laufzeit der empfangenen Ultraschallsignale zwischen Sender und Empfänger ausgewertet wird.

11. Verwendung eines Verfahrens zum Erkennen von stückigen Festkörpern in Lebensmitteln, die als viskose oder flüssige Masse vorliegen, das die folgenden Verfahrensschritte aufweist
- Erwärmen der Masse und vorzugsweise kontinuierliche Förderung der Masse durch eine Meßstrecke (2),
- Messung des Förderstromes,
- Aussendung von Ultraschallsignalen durch die in der Meßstrecke (2) geführte Masse,
- Empfang der Ultraschallsignale nach einmaligem oder zweimaligem Durchlaufen der in der Meßstrecke geführten Masse,
- Vergleich mindestens eines empfangenen Ultraschallsignals mit mindestens einem vorbestimmten Grenzwert und
- Erzeugung eines Alarm- und/oder Aktivierungssignals, wenn mindestens eines der empfangenen Ultraschallsignale den mindestens einen vorbestimmten Grenzwert unter- oder überschreitet, zur Unterbrechung der Masseförderung und/oder Ableitung der Masse aus dem Förderstrom.

12. Vorrichtung zur Durchführung des Verfahrens nach einem der Ansprüche 1 bis 10 zum Erkennen von stückigen Fremdkörpern in Lebensmitteln, die als viskose oder flüssige Masse vorliegen,
- mit einem Mittel zur vorzugsweise kontinuierlichen Förderung der Masse durch eine Meßstrecke (2),
- mit einem Mittel zum Messen des Förderstroms,
- mit einem Mittel zum Aussenden von Ultraschallsignalen durch die in der Meßstrecke (2) geführten Masse,
- mit einem Mittel zum Empfang der Ultraschallsignale nach einmaligem oder zweimaligem Durchlaufen der in der Meßstrecke (2) geführten Masse,
- mit einem Mittel zum Vergleichen mindestens eines empfangenen Ultraschallsignals mit mindestens einem vorbestimmten Grenzwert und
- mit einem Mittel zur Erzeugung eines Alarm- und/oder Aktivierungssignals, wenn mindestens eines der empfangenen Ultraschallsignale den mindestens einen vorbestimmten Grenzwert unter- oder überschreitet, zur Unterbrechung der Masseförderung und/oder Ableitung der Masse aus dem Förderstrom, dadurch gekennzeichnet, dass Mittel zur Erwärmung der Masse vor ihrer Förderung durch die Meßstrecke (2) vorgesehen sind.

13. Vorrichtung nach Anspruch 12, **dadurch gekennzeichnet,** daß mindestens eine Wand der Meßstrecke als Reflektor (23) dient.

14. Vorrichtung nach Anspruch 12 oder 13, **dadurch gekennzeichnet,** daß mindestens ein Ultraschallsender (21) und mindestens ein Ultraschallempfänger (22) zu einer Baugruppe zusammengefaßt sind.

15. Vorrichtung nach mindestens einem der Ansprüche 12 bis 14, **dadurch gekennzeichnet,** daß mindestens ein Ultraschallelement abwechselnd als Sender und/oder Empfänger betreibbar ist.

16. Vorrichtung nach mindestens einem der Ansprüche 12 bis 15, **dadurch gekennzeichnet,** daß jedem Ultraschallsender (21) ein Ultraschallempfänger (22) zugeordnet ist und die Ultraschallsender sowie die jeweils zugeordneten Ultraschallempfänger einzeln nacheinander ansteuerbar sind.

17. Vorrichtung nach mindestens einem der Ansprüche 12 bis 16, **dadurch gekennzeichnet,** daß einem Ultraschallempfänger (22) mehrere Ultraschallsender (21) zugeordnet sind und die Ultraschallsender einzeln nacheinander ansteuerbar sind.

18. Vorrichtung nach mindestens einem der Ansprüche 12 bis 17, **dadurch gekennzeichnet,** daß einem Ultraschallsender (21) mehrere Ultraschallempfänger (22) zugeordnet sind und die Ultraschallempfänger einzeln nacheinander ansteuerbar sind, wobei die von den Ultraschallempfängern (22) empfangenen Signale gleichzeitig ausgewertet werden.

19. Vorrichtung nach mindestens einem der Ansprüche 12 bis 18, **dadurch gekennzeichnet,** daß die einzelnen Ultraschallsender (21) und/oder Ultraschallempfänger (22) mit abweichenden oder wechselnden Frequenzen betreibbar sind.

20. Vorrichtung nach mindestens einem der Ansprüche 12 bis 19, **dadurch gekennzeichnet,** daß die einzelnen Ultraschallsender (21) und der/die zugeordneten Ultraschallempfänger (22) mit voneinander abweichenden Frequenzen betrieben werden.

21. Vorrichtung nach mindestens einem der Ansprüche 12 bis 20, **dadurch gekennzeichnet,** daß die zu prüfende Masse in Behälter gefüllt ist.

22. Vorrichtung nach mindestens einem der Ansprüche 12 bis 21, gekennzeichnet durch eine stromabwärts der Meßstrecke (2) angeordnete Weiche (4), durch welche die Masse in Abhängigkeit von dem Unter- oder Überschreiten des Schwellwertes in verschiedene Förderstrecken geleitet wird.

## Claims

1. Method for detecting foreign bodies in viscous or liquid material masses, with the following procedure steps:
- preferably continuous conveying of the material mass through a measurement line section (**2**),
- measuring the conveyed stream,
- transmission of ultrasonic signals through the material mass conveyed in the measurement line section (**2**),
- reception of the ultrasonic signals after a single pass or a double pass through the material mass conveyed in the measurement line section (**2**),
- comparison of at least one received ultrasonic signal with at least one predetermined threshold value and
- generation of an alarm and/or activation signal if at least one of the received ultrasonic signals exceeds or falls below a predetermined threshold value to interrupt the material transport and/or to divert the material mass from the transport flow, characterized in that the mass is a foodstuff having lumpy content and in that the mass is heated before being conveyed through the measurement line section (**2**).

2. Method according to claim 1, characterized by the fact that a solvent is added to the mass flow with the activating signal.

3. Method according to claim 1 or 2, characterized by the fact that the temperature of the mass flow is increased through the activating signal to liquefy solid bodies.

4. Method according to at least one of the previous claims, characterized by the fact that a controlling of the crystallization processes and/or a division between phases is started by the activating signal.

5. Method according to at least one of the previous claims, characterized by the fact that the amplitude of the received ultrasonic signals is evaluated.

6. Method according to at least one of the previous claims, characterized by the fact that the change in amplitude of several successive ultrasonic signals is evaluated.

7. Method according to at least one of the previous claims, characterized by the fact that the speed of change in amplitude of several successive ultrasonic signals is evaluated.

8. Method according to at least one of the previous claims, characterized by the fact that the amplitudes of the ultrasonic signals sent are controlled in such a way that the amplitudes of the received ultrasonic signals are constant, where the change in manipulated variable is compared to the predetermined threshold value.

9. Method according to at least one of the previous claims, characterized by the fact that the ultrasonic signals are pulsed.

10. Method according to at least one of the previous claims, characterized by the fact that the time of travel between transmitter and receiver of the received ultrasonic signals is evaluated.

11. Use of a method for detecting lumpy solid material in foodstuffs which are present in form of a viscous or liquid material mass, having the following procedure steps
- heating the mass and preferably continuous conveying of the material mass through a measurement line section (**2**),
- measuring the conveyed stream,
- transmission of ultrasonic signals through the material mass conveyed in the measurement line section (**2**),
- reception of the ultrasonic signals after a single pass or a double pass through the material mass conveyed in the measurement line section (**2**),
- comparison of at least one received ultrasonic signal with at least one predetermined threshold value and
- generation of an alarm and/or activation signal if at least one of the received ultrasonic signals exceeds or falls below a predetermined threshold value to interrupt the material transport and/or to divert the material mass from the transport flow.

12. Device for carrying out the method according to at least one of the claims 1 to 10 for detecting lumpy solid material in foodstuffs which are present in form of a viscous or liquid material mass,
- with means for preferably continuous conveying of the material mass through a measurement line section (**2**),
- with means for measuring the conveyed stream,
- with means for transmission of ultrasonic signals through the material mass conveyed in the measurement line section (**2**),
- with means for reception of the ultrasonic signals after a single pass or a double pass through the material mass conveyed in the measurement line section (**2**),
- with means for comparison of at least one received ultrasonic signal with at least one predetermined threshold value and
- with means for generation of an alarm and/or activation signal if at least one of the received ultrasonic signals exceeds or falls below a predetermined threshold value to interrupt the material transport and/or to divert the material mass from the transport flow, characterized in that means are provided for heating the mass before conveying the mass through the measurement line section (**2**).

13. Device according to claim 12, characterized by the fact that at least one wall of the measurement line section is used as reflector (**23**).

14. Device according to at least one of claims 12 or 13, characterized by the fact that at least one ultrasonic transmitter (**21**) and at least one ultrasonic receiver (**22**) are combined to form an assembly.

15. Device according to at least one of claims 12 to 14, characterized by the fact that at least one ultrasonic element can be used as a transmitter and/or a receiver alternately.

16. Device according to at least one of claims 12 to 15, characterized by the fact that each ultrasonic transmitter (**21**) has an ultrasonic receiver (**22**) allocated to it, and that the ultrasonic transmitters as well as the corresponding ultrasonic receivers allocated to them can be successively triggered one by one.

17. Device according to at least one of claims 12 to 16, characterized by the fact that one ultrasonic receiver (**22**) has several ultrasonic transmitters (**21**) allocated to it, and that the ultrasonic transmitters can be successively triggered one by one.

18. Device according to at least one of claims 12 to 17, characterized by the fact that one ultrasonic transmitter (**21**) has several ultrasonic receivers (**22**) allocated to it, and that the ultrasonic receivers can be successively triggered one by one, where by the signals received by the ultrasonic receivers (**22**) are evaluated at the same time.

19. Device according to at least one of claims 12 to 18, characterized by the fact that the individual ultrasonic transmitters (**21**) and/or ultrasonic receivers (**22**) are operated at deviating or alternating frequencies.

20. Device according to at least one of claims 12 to 19, characterized by the fact that the individual ultrasonic transmitters (**21**) and/or ultrasonic receivers (**22**) can be operated at deviating or alternating frequencies.

21. Device according to at least one of claims 12 to 20, characterized by the fact that the mass to be tested is filled in receptacles.

22. Device according to at least one of the claims 12 to 21, characterized by the presence of a shunt (**4**) which is located downstream of the measurement section (**2**), through which the mass, according to the surpassing or subpassing of the threshold value, is directed onto different hoisting tracks.

## Revendications

1. Procédé de détection de corps étrangers dans des masses visqueuses ou liquides, comprenant les étapes de procédé suivantes:
- transport de préférence continu de la masse à travers une section de mesure (2),
- mesurage du courant transporté,
- émission de signaux ultransonores à travers la masse transportée dans la section de mesure (2)
- réception des signaux ultrasonores après un passage simple ou un double passage à travers la masse transportée dans la section de mesure,
- comparaison d'au moins un signal ultrasonore reçu avec du moins une valeur limite prédéterminée et
- génération d'un signal d'alarme et/ou d'activation si l'un du moins des signaux ultrasonores reçus est inférieur à ladite valeur limite prédéterminée ou dépasse celle-ci, pour interrompre le transport de la masse et/ou pour détourner la masse du courant transporté, caractérisé par le fait que la masse est une denrée alimentaire qui présente des matières contenues en morceaux, et par le fait que la masse est chauffée avant d'être transportée à travers la section de mesure (2).

2. Procédé selon la revendication 1, caractérisé par le fait qu'un solvant est ajouté au courant de masse par l'intermédiaire du signal d'activation.

3. Procédé selon la revendication 1 ou 2, **caractérisé par le fait** que la température du courant de masse est augmentée par le signal d'activation afin de dissoudre des corps solides.

4. Procédé selon l'une du moins des revendications précédentes, **caractérisé par le fait** qu'une commande de procédés de cristallisation et/ou une séparation de phases est introduite par ledit signal d'activation.

5. Procédé selon l'une du moins des revendications précédentes, **caractérisé par le fait** que l'amplitude des signaux ultrasonores reçus est évaluée.

6. Procédé selon l'une du moins des revendications précédentes, **caractérisé par le fait** que la modification de l'amplitude de plusieurs signaux ultrasonores reçus successivement est évaluée.

7. Procédé selon l'une du moins des revendications précédentes, **caractérisé par le fait** que la vitesse de modifications d'amplitude de plusieurs signaux ultrasonores reçus successivement est évaluée.

8. Procédé selon l'une du moins des revendications précédentes, **caractérisé par le fait** que les amplitudes des signaux ultrasonores émis sont réglées de telle manière que les amplitudes des signaux ultrasonores reçus sont constantes, le changement de la variable réglante étant comparé à la valeur limite prédéterminée.

9. Procédé selon l'une du moins des revendications précédentes, **caractérisé par le fait** que les signaux ultrasonores sont pulsés.

10. Procédé selon l'une du moins des revendications précédentes, **caractérisé par le fait** que l'on évalue le temps de parcours entre l'émetteur et le récepteur des signaux ultrasonores reçus.

11. Utilisation d'un procédé de détection de corps solides en morceaux dans des denrées alimentaires qui sont présentes en tant que masse visqueuse ou liquide, ce procédé présentant les étapes de procédé suivantes
- éhauffement de la masse et transport de préférence continu de la masse à travers une section de mesure (2),
- mesurage du courant transporté,
- émission de signaux ultransonores à travers la masse transportée dans la section de mesure (2)
- réception des signaux ultrasonores après un passage simple ou un double passage à travers la masse transportée dans la section de mesure,
- comparaison d'au moins un signal ultrasonore reçu avec du moins une valeur limite prédéterminée et
- génération d'un signal d'alarme et/ou d'activation si l'un du moins des signaux ultrasonores reçus est inférieur à ladite valeur limite prédéterminée ou dépasse celle-ci, pour interrompre le transport de la masse et/ou pour détourner la masse du courant transporté.

12. Dispositif destiné à la mise en oeuvre du procédé selon l'une des revendications 1 à 10 pour détecter des corps étrangers en morceaux dans des denrées alimentaires qui sont présentes sous forme d'une masse visqueuse ou liquide,
- comprenant un moyen pour le transport de préférence continu de la masse à travers une section de mesure (2),
- comprenant un moyen destiné à mesurer le courant transporté,
- comprenant un moyen destiné à l'émission de signaux ultrasonores à travers la masse transportée dans la section de mesure (2),
- comprenant un moyen pour la réception des signaux ultrasonores après un passage simple ou un double passage à travers la masse transportée dans la section de mesure (2),
- comprenant un moyen pour comparer du moins un signal ultrasonore reçu à du moins une valeur limite prédéterminée et
- comprenant un moyen pour la génération d'un signal d'alarme et/ou d'activation si l'un du moins des signaux ultrasonores reçus est inférieur à ladite valeur limite prédéterminée ou dépasse celle-ci, pour interrompre le transport de la masse et/ou pour détourner la masse du courant transporté, caractérisé par le fait que l'on prévoit des moyens pour échauffer la masse avant de son transport à travers la section de mesure (2).

13. Dispositif selon la revendication 12, **caractérisé par le fait** que du moins une paroi de la section de mesure sert de réflecteur (23).

14. Dispositif selon la revendication 12 ou 13, **caractérisé par le fait** que du moins un émetteur d'ultra-sons (21) et du moins un récepteur d'ultra-sons (22) sont combinés de manière à former un ensemble.

15. Dispositif selon l'une du moins des revendications 12 à 14, **caractérisé par le fait** que du moins un élément à ultra-son peut être utilisé de façon alternative comme émetteur et/ou comme récepteur.

16. Dispositif selon l'une du moins des revendications 12 à 15, **caractérisé par le fait** que l'on associe un récepteur d'ultra-sons (22) à chaque émetteur d'ultra-sons (21) et que les émetteurs d'ultra-sons ainsi que les récepteurs d'ultra-sons respectivement associés peuvent être excités successivement un à un.

17. Dispositif selon l'une du moins des revendications 12 à 16, **caractérisé par le fait** que l'on associe plusieurs émetteurs d'ultra-sons (21) à un récepteur d'ultra-sons (22) et que les émetteurs d'ultra-sons peuvent être excités successivement un à un.

18. Dispositif selon l'une du moins des revendications 12 à 17, **caractérisé par le fait** que l'on associe plusieurs récepteurs d'ultra-sons (22) à un émetteur d'ultra-sons (21) et que les récepteurs d'ultra-sons peuvent être excités successivement un à un, les signaux reçus par les récepteurs d'ultra-sons (22) sont évalués en même temps.

19. Dispositif selon l'une du moins des revendications 12 à 18, **caractérisé par le fait** que les émetteurs d'ultra-sons (21) individuels et/ou les récepteurs d'ultra-sons (22) individuels peuvent être opérés à des fréquences déviantes ou alternatives.

20. Dispositif selon l'une du moins des revendications 12 à 19, **caractérisé par le fait** que les émetteurs d'ultra-sons (21) individuels et le/les récepteur(s) d'ultra-sons (22) associé(s) sont opérés à des fréquences déviant l'une de l'autre.

21. Dispositif selon l'une du moins des revendications 12 à 20, **caractérisé par le fait** que la masse à examiner est versée dans des récipients.

22. Dispositif selon l'une du moins des revendications 12 à 21, **caractérisé par** une aiguille (4) disposée en aval de la section de mesure (2), à travers laquelle la masse - en fonction du fait de rester inférieur à la valeur seuil ou de dépasser celle-ci - est dirigée dans des sections différentes de transport.
